# EUROPEAN PATENT APPLICATION

(11) **EP 1 365 412 A1**
(43) Date of publication of application: **26.11.2003**
(21) Application number: 02291253.9
(22) Date of filing: 22.05.2002
(51) Int. Cl.: G11B 27/28, G11B 27/32, G11B 27/10, G11B 27/34, H04N 5/76, H04N 5/775, H04N 5/92, H04N 5/45, H04N 5/445

(54) **A customized video archiving system and storage compression scheme**

(71) Applicant: Thomson Licensing S.A., 92648 Boulogne Cedex (FR)
(72) Inventor: Fani, Eric, 78050 VS-Villingen (DE)
(74) Representative: Rossmanith, Manfred, Dr.

(57) **Abstract**

A customized video archiving system, comprising: a video processing means for processing a signal received from a video source; a recording means for recording the signal outputted from said video processing means and providing an output signal; a screen display source generator for generating contents to be displayed on a screen; a switching/mixing means for switching between the signal outputted from said recording means and said contents generated by said screen display source generator and providing selected video contents; and a PIP processing means for performing picture-in-picture processing on said selected video contents provided from said switching/mixing means, and outputting a PIP processed signal, said PIP processed signal being fed back to said video processing means so as to be fully inserted into the incoming video signal and display a mosaic of different segments recorded on the recording means. Said system provides a way of flexible, fast access and efficient customized video archiving and an effective storage compression scheme.

## Description

### Technical Field

The present invention relates to a customized video archiving system, and a storage compression scheme.

### Background Art

With the increase in capacity of recording devices, a suitable archiving system and suitable archiving method are desirable. Moreover, capacity management is also a very important aspect of scanning large recording space within a short time.

### Disclosure of the Invention

One object of the invention is to provide a way for a flexible, fast access and efficient customized video archiving system.

Another object of the invention is to provide a storage compression scheme for saving storage capacity.

According to one aspect of the invention, the present invention provides a customized video archiving system, comprising: a video processing means for processing a signal received from a video source; a recording means for recording the signal outputted from said video processing means and providing an output signal; a screen display source generator for generating contents to be displayed on a screen; a switching/mixing means for switching between the signal outputted from said recording means and said contents generated by said screen display source generator and providing selected video contents; and a PIP processing means for performing picture-in-picture processing on said selected video contents provided from said switching/mixing means, and outputting a PIP processed signal, said PIP processed signal being fed back to said video processing means so as to be fully inserted into the incoming video signal and display a mosaic of different segments recorded on the recording means.

According to the second aspect of the invention, the present invention provides a storage compression system for increasing the storage capacity of a storage medium, comprising: a PIP processing means for performing picture-in-picture processing on a first video program and outputting a PIP processed signal; a mixing means for mixing said PIP processed signal of said first video program with a video signal of a second program and outputting a mixed signal; a recording means for recording said mixed signal including both the first and second signals on said storage medium.

The present invention provides a way to create a flexible, fast access and cost-effective program retrieval method by regenerating video information into the recording path of the system and create a customized table of contents to be stored on the medium and/or in the apparatus. By means of software linkage, more information can be stored under the tree of the table of content.

Moreover, the present invention allows simultaneous recording of two programs running concurrently by using a PIP processor with a split screen function. This would increase the storage capacity twofold, with a loss in video and sound resolutions.

In the event of a shared usage of the resource as it happens in a family, the system provides the ability to create a library and to include a check-in system for members to indicate they already watched a stored program. When capacity limit is reached, the system provides a possibility to increase capacity twofold or more.

### Brief Description of the Drawings

The forgoing and other objects, aspects and advantages will be better understood from the following detailed description of preferred embodiments of the invention with reference to the drawings, in which:
Figure 1 is a block diagram for a customized video archiving system in accordance with this invention;
Figure 2 is a example of the customized video archiving system of figure 1;
Figure 3 is a block diagram for a further embodiment of the customized video archiving system of figure 1;
Figure 4 is a schematic diagram of an example for the embodiment of the customized video archiving system of figure 3.

### Detailed Description of the preferred Embodiments

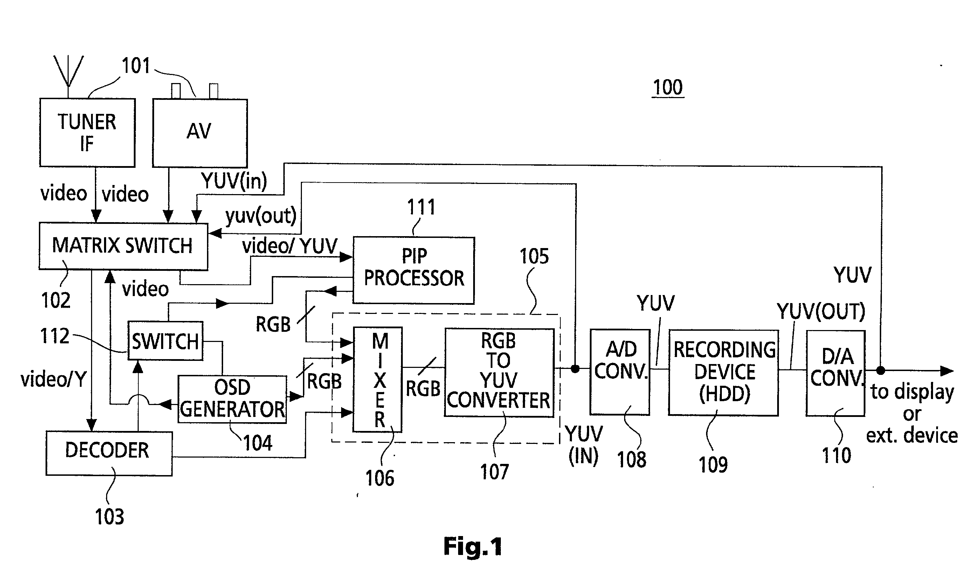

Figure 1 is a block diagram for a customized video archiving system 100 in accordance with this invention. As shown in figure 1, the system 100 is composed of a video source 101 ( such as a tuner interface, a AV device etc.), from which the video signal is received; a video processor 105, including a RGB mixer 106 and a RGB to YUV converter 107; a A/D converter 108 which converts an analog signal into a digital signal; a recording device (such as HDD) 109, on which a desired signal and information are recorded; a D/A converter 110 which converts a digital signal into an analog signal; a PIP (Picture-in-Picture) processor 111 which can concurrently process a plurality of video signals in a plurality of window each showing a video signal therein in form of picture-in-picture. Furthermore, the system 100 includes a matrix switch 102; a decoder 103; a OSD (on-screen display) generator 104; and a switch 112.

In figure 1, the input of the matrix switch 102 is coupled to the output of the video source 101, as well as the input and output of the recording device 109. One of two outputs of the matrix switch 102 is connected to the PIP processor 111, and the other one is connected to the decoder 103; the signal outputted from the decoder 103 is sent to RGB mixer 106 of the video processor 105 and the switch 112 respectively; the signal outputted from the OSD generator 104 is also sent to RGB mixer 106 of the video processor 105 and the switch 112 respectively; the switch 112 selects one signal between the signal outputted from the decoder 103 and the signal outputted from the OSD generator 104, and the result is sent to the PIP processor 111; the signal outputted from the PIP processor 111 is sent to the RGB mixer 106 of the video processor 105; the signal outputted from the RGB mixer 106 is sent to the RGB to YUV converter 107, then converted in the A/D converter 108 into a digital signal, and then recorded on the recording device 109; when starting a play function of the recording device 109, the recorded digital signal is converted into a analog signal in the D/A converter 110, then sent to the matrix switch 102 or a external device (not shown) to display.

Now, the operation of the system 100 will be described in detail with reference to the figure 1.

Firstly, the video signal from the matrix switch 102 is routed to the decoder 103 to be decoded, then the decoded video signal is routed to the RGB mixer 106 of the video processor 105 and then directed to the recording device 109.

The OSD generator 104 generates contents to be displayed and routes them to the switch 112. The switch 112 selects the decoded video signal from the decoder 103 or the generated video signal from the OSD generator 104, and sends the result to the PIP processor 111. The PIP processor 111 performs PIP processing on the video signal outputted from the matrix switch 102 and the video signal outputted from the switch 112.

The PIP processed signal outputted from the PIP processor is then fed back to the video processor 105 in order to be fully inserted into the incoming video signal and display for instance a mosaic of the different segments available on the recording device 109, thus creating a "DVD-menu" like.

The system 100 provides a sampling means to sample the different segments on the recording device 109, and by default display a fixed picture from the beginning of this segment into a PIP window. The user can then make use of the navigation keys in order to select the very picture which he/she thinks represents in the best way this particular recorded segment.

The system further includes a pictorial menu generating means. Once the selection made by the user is complete for the full mosaic, the pictorial menu generating means will memorize the selected picture location and archiving them in order to rebuild the mosaic rapidly for editing or new coming material to form a pictorial menu; then the system will record the pictorial menu including selected picture location and the archiving information into the recording device 109, and display the selected picture on a display device (not shown), which will serve as a convenient index page, which access is faster than a reconstruction of the mosaic.

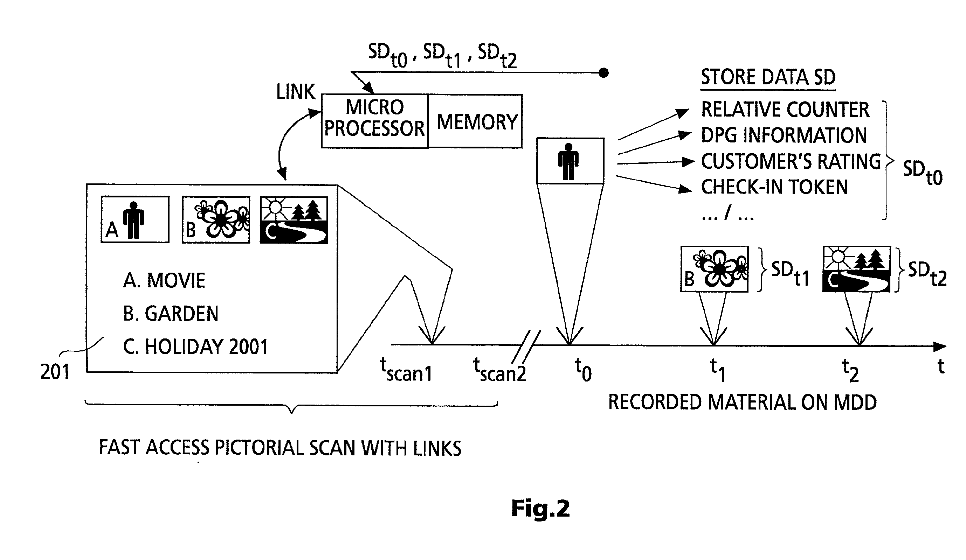

Now, an applicable example of the system 100 will be explained in detail with reference to the figure 2.

Figure 2 is an applicable example of the customized video archiving system 100 of figure 1. As shown in figure 2, the menu 201 includes for example three pictures each representing a corresponding segment (store data, hereinafter referred to as SD) available on the recording device 109, in which A is "movie", B is "garden", and C is "holiday 2001". The corresponding segments (SDₜ₀, SD_{t1,} SDₜ₂) recorded on the recording device 109 are located at t₀, t₁ and t₂ respectively. The menu 201 is recorded at t_{scan1} , and other menus containing other pictures representing other segments are recorded at t_{scan2} etc.. This will enable the user to visually browse through the recording device 109 content as an alternative or a complement to written listing.

By means of software linkage, more information can be stored under the tree of the first menu 201. For example, information on check-in markers, personal comments (annotations, ratings, etc.), and EPG (Electronic Program Guide) material can be stored in the SDₜ₀ at t₀.

When playing the contents recorded on the recording device 109, the user will firstly scan the menu 201, menu 202 (not shown), etc., then he/she can select the SDₜ₀ to read the information recorded in the SDₜ₀or view the programs recorded therein, he/she can also select the SDₜ₁ SDₜ₂, etc. to view the programs recorded therein.

In case the user wants to make a back-up copy for long term storage, on a VCR for instance, the created pictorial menu stored on the recording device 109 can be used as a header and recorded on the VCR, and it can include information about duration, for instance. Moreover, the system provides a platform to create a sampling every 5mins of the material for instance (or equally spaced, in order to fill in the PIP mosaic). By doing so and with the relative time indication, the user will enjoy a friendly preview to guide him through the liner recording.

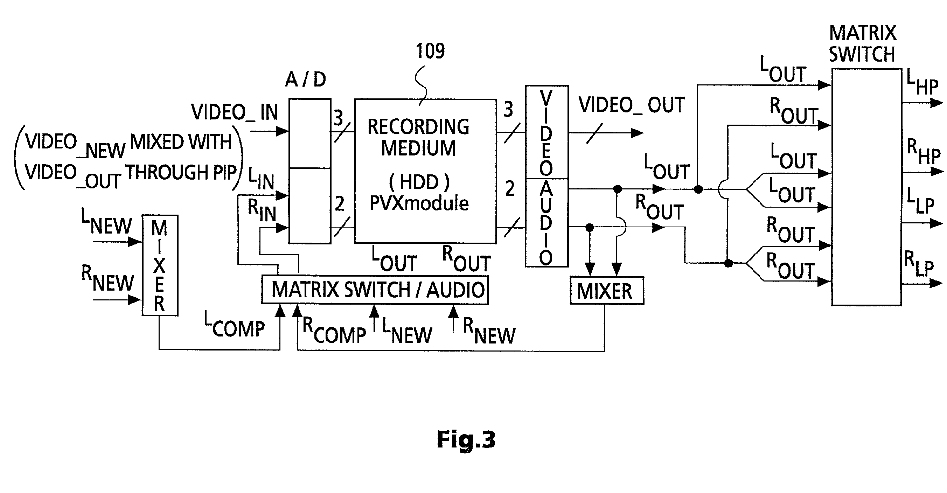

Now, a further embodiment of the customized video archiving system of figure 1, which can increase storage capacity twofold as a storage compression system, will be described in detail with reference to the figure 1 and 3.

Figure 3 is a block diagram for a further embodiment of the customized video archiving system of figure 1 which is used as storage compression system. Assuming the user has no more capacity on the recording device 109 and wishes to make recording of another program without losing what he has previously stored. As shown in the figure 1, the programs recorded on the recording device 109 can be played, the matrix switch 102 routes the video signal outputted from the recording device 109 to the PIP processor 111. The PIP processed video signal is routed to the RGB mixer 106 of the video processor 105.

Another incoming signal is fed to the RGB mixer 106 as a second window to be mixed with the video signal received from the PIP processor 111. In the figure 3, the video_out and the Lₒᵤₜ+Rₒᵤₜ are respectively the video and audio signals previously stored on the recording device 109; the video_new and L_{neW}+R_{new} are respectively the video and audio signals received from a new source. As shown in the figure 3, the mixed signal (video_out+video_new) is recorded into the recording device 109. The sound of a window (such as L_{new}+R_{new}) is routed to the right channel ( such as Rᵢₙ signal) whereas the sound of the other window (such as Lₒᵤₜ+Rₒᵤₜ) is routed to the left channel (such as Lin signal). The mixed signal (Rᵢₙ signal and Lᵢₙ signal) is also recorded into the recording device 109.

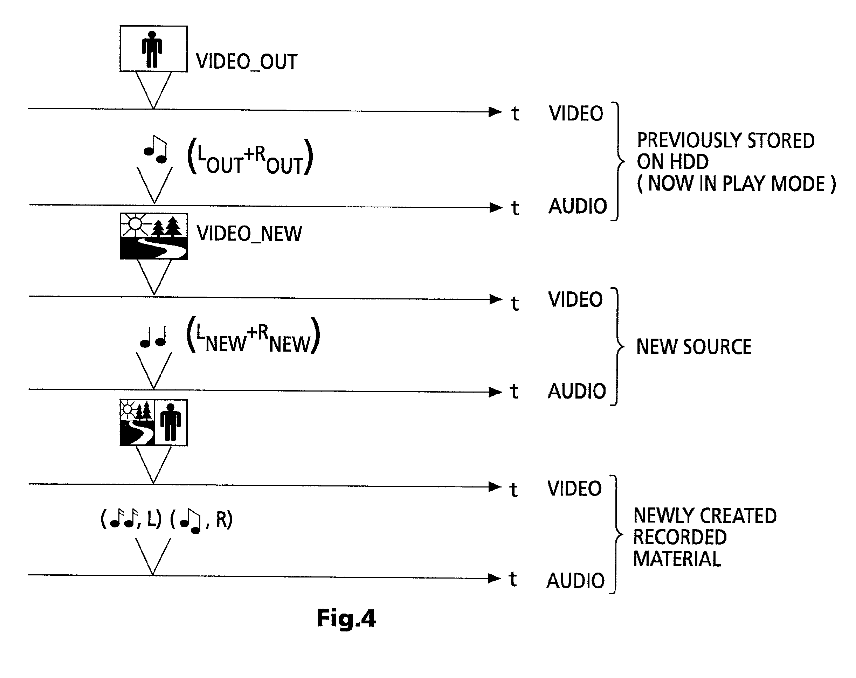

Figure 4 is a schematic diagram of an example for the embodiment of the customized video archiving system of figure 3.

As shown in figure 4, the video_out is a video signal previously stored on the recording device 109, and the Lₒᵤₜ+Rₒᵤₜ is an audio signal previously stored on the recording device 109. The video_new and L_{new}+R_{new} are respectively the video and audio signals received from the new source. After being mixed in the mixer 106, the newly created material which occupies the same size with the total size that the old material occupies on the recording device 109. So with a loss in video and sound resolutions, the content is increased up to factor 2 on the recording device 109, this will achieve further compression of the recording device 109 and increase the storage capacity twofold. Selecting the lowest resolution for the recording of the regenerated signal can lead to a compression factor greater than 2.

As shown in Fig. 3 and 4, the present invention allows simultaneous recording of two programs running concurrently by using a split screen function of the PIP and routing the sound of a window to the right channel path whereas the other window is allocated the left channel. Upon playback, the user can select either source (mono bisonic) or route one path through headphone and the other to the audio cinch or loudspeakers. This would increase the storage capacity twofold.

With the help of a marker system in terms of memory management, it is possible for the user to label those programs he accepts to be processed in this way. A protected movie program will not be affected but a soap opera will be affected, for instance.

Having described and illustrated the principles of the invention in the preferred embodiments thereof, it should be apparent that the invention can be modified in arrangement and detail, without departing from the spirit and scope of the invention.

## Claims

1. A customized video archiving system, comprising:
a video processing means for processing a signal received from a video source;
a recording means for recording the signal outputted from said video processing means and providing an output signal;
a screen display source generator for generating contents to be displayed on a screen;
a switching/mixing means for switching between the signal outputted from said recording means and said contents generated by said screen display source generator and providing selected video contents; and
a PIP processing means for performing picture-in-picture processing on said selected video contents provided from said switching/mixing means, and outputting a PIP processed signal , said PIP processed signal being fed back to said video processing means so as to be fully inserted into the incoming video signal and display a mosaic of different segments recorded on the recording means.

2. The customized video archiving system as set forth in claim 1, wherein said video processing means includes a matrix switch for routing the received video signal and a decoder for decoding the received video signal.

3. The customized video archiving system as set forth in claim 2, wherein said switching/mixing means includes a switch for switching between the video signal outputted from the decoder and the contents to be displayed from said screen display source generator; and a mixer for mixing the the contents to be displayed from said screen display source generator with the output signal from the decoder and the output signal from the PIP processing means, and outputting a mixed signal to said recording means.

4. The customized video archiving system as set forth in claim 3, wherein said contents to be displayed include a customized table of content.

5. The customized video archiving system as set forth in claim 4, wherein said contents to be displayed includes Electronic program Guide material, personal comments such as annotations and ratings, and check-in markers by means of software linkage.

6. The customized video archiving system as set forth in claim 5, wherein said recording means is a HDD, said screen display source generator is a microprocessor based On-Screen Display generator, and said video source is a TV receiver or a Audio/Video device.

7. The customized video archiving system as set forth in any one of claims 1-6, wherein said PIP processing means is a multiple window PIP processor for displaying multiple PIP picture windows in a picture displayed on a screen.

8. The customized video archiving system as set forth in claim 7, further comprising a sampling means for sampling the different segments on the recording means and displaying a picture in a PIP window; a user navigation means for facilitating the user to select a picture representative of a particular recorded segment; and a pictorial menu generating means for generating a pictorial menu by memorizing and archiving the selected picture locations when the selection by the user is complete, and the generated pictorial menu being recorded on the recording means, as a convenient index page.

9. The customized video archiving system as set forth in claim 8, wherein when said a user wants to make a back-up copy for long-term storage, the pictorial menu stored on said recording means is used as a header and recorded in addition to the video segments.

10. The customized video archiving system as set forth in claim 9, wherein information on duration of each video segment is recorded together with said pictorial menu.

11. The customized video archiving system as set forth in claim 10, wherein said navigation means includes navigation keys to be operated by a user.

12. A storage compression system for increasing the storage capacity of a storage medium; comprising the steps of:
a PIP processing means for performing picture-in-picture processing on a first video program and outputting a PIP processed signal;
a mixing means for mixing said PIP processed signal of said first video program with a video signal of a second program and outputting a mixed signal;
a recording means for recording said mixed signal including both the first and second signals on said storage medium.

13. The storage compression system as set forth in claim 12, wherein said first video program is stored previously on said storage medium and played-back from said storage medium.

14. The storage compression system as set forth in claim 13, wherein the said PIP processing means is a PIP processor with split screen function which splits the screen into two windows.

15. The storage compression system as set forth in claim 14, wherein sound of one window is routed to the right channel while that of the other window is allocated to the left channel.
